# EUROPÄISCHE PATENTSCHRIFT

(11) **EP 3 118 356 B1**
(45) Veröffentlichungstag und Bekanntmachung des Hinweises auf die Patenterteilung: **04.11.2020**
(21) Anmeldenummer: 16179207.2
(22) Anmeldetag: 13.07.2016
(51) Int. Cl.: D01H 4/44

(54) **VERFAHREN ZUM SICHEREN STARTEN UND/ODER STOPPEN EINES ROTORS EINER ROTORSPINNMASCHINE UND ROTORSPINNMASCHINE**
METHODS FOR SECURELY STARTING AND/OR STOPPING A ROTOR OF A ROTOR SPINNING MACHINE AND ROTOR SPINNING MACHINE
PROCEDE DE DEMARRAGE ET/OU D'ARRET D'UN ROTOR D'UN METIER A FILER A ROTOR ET METIER A FILER A ROTOR

(30) Priorität: 17.07.2015 DE 102015111673
(43) Veröffentlichungstag der Anmeldung: 18.01.2017
(73) Patentinhaber: Rieter CZ s.r.o., 562 01 Ústí nad Orlicí (CZ)
(72) Erfinder: Bahlmann, Bernd, 86529 Schrobenhausen (DE); Maleck, Mario, 85137 Walting (DE); Stusak, Miroslav, 56501 Chocen (CZ); Moravec, Milan, 56201 Usti nad Orlici (CZ); Sloupensky, Jiri, 56201 Usti nad Orlici (CZ); Dirnberger, Peter, 4490 St. Florian (AT)
(74) Vertreter: Bergmeier, Werner

(56) Entgegenhaltungen:
- EP-A2- 1 612 308
- EP-A2- 2 006 557
- EP-A2- 2 110 470
- WO-A1-2007/012358
- WO-A1-2009/059704
- CN-U- 204 174 353
- DE-A1- 4 404 243
- DE-A1- 10 117 095

## Beschreibung

Die vorliegende Erfindung betrifft ein Verfahren zum sicheren Starten und/oder Stoppen eines Rotors einer Rotorspinnmaschine zur Erzeugung von Garnen, mit einer Vielzahl von Motoren, die jeweils in einem von einem Deckel abgedeckten Rotorgehäuse rotieren, wobei jeder Rotor von einem eigenen Motor angetrieben und in zumindest einem radial und/oder axial aktiven Magnetlager mittels einer Lageregelung gehalten wird und eine Datenverbindung des Motors mit einer Steuerung vorgesehen ist, um den Rotor in verschiedenen Betriebszuständen anzusteuern.

Aus der DE 10 2000 700 851 A1 ist eine Offenend-Spinnvorrichtung mit einem Spinnrotor bekannt. Der Spinnrotor wird mittels eines Riemens über seinen Schaft angetrieben. Der Spinnrotor befindet sich in einem Rotorgehäuse, welches von einem Deckelelement abgedeckt ist. Das Öffnen des Rotorgehäuses, das heißt das Entfernen des Deckelelementes von dem Rotorgehäuse, kann nur mittels Anhebens eines Griffstücks erfolgen. Durch das Anheben des Griffstücks wird der Rotor gebremst, so dass eine Drehung des Rotors bei geöffnetem Rotorgehäuse verhindert wird. Die Gefahr einer Verletzung eines Bedieners durch den sich noch drehenden Rotor wird hierdurch vermieden.

Aus der DE 26 58 477 A1 ist ein Einzelantrieb eines Rotors einer Offenend-Spinnmaschine bekannt. Jeder Rotor hat dabei seinen eigenen Antrieb und ist mit einer Steuerung verbunden. Die Steuerung bewirkt z.B., dass bei einem fehlerhaft gesponnenen Garn eine Änderung des vom Spinnrotor aufgenommenen Stroms registriert und gegebenenfalls eine Abschaltung des Motors bewirkt wird.

Aus der EP 2 006 557 A2 ist ein Verfahren und eine Vorrichtung zum Starten einer elektrischen Maschine mit einem magnetisch gelagerten Rotor bekannt. Das magnetische Lager weist Permanentmagnete, eine Aktorik zur Regelung der Lage in axialer Richtung und zwei axiale Begrenzungslager, durch die die axialen Endstellungen des Rotors bestimmt werden, auf. Mittels jeweils eines Abhebeprozesses aus den axialen Endstellungen werden variable Systemgrößen beim Abheben mit Referenzwerten verglichen. Bei einer vorher festgelegten Abweichung der variablen Systemgröße von den Referenzwerten wird ein Fehlersignal generiert.

Auch wenn im Stand der Technik Vorgehensweisen beschrieben sind, mit welchen ein Rotor einer Offenend-Spinnvorrichtung gestoppt werden soll, so ist dennoch ein detailliertes Sicherheitskonzept hieraus nicht zu erkennen.

Aufgabe der vorliegenden Erfindung ist es daher ein Verfahren zum sicheren Starten und/oder Stoppen eines Rotors einer Rotorspinnmaschine und eine entsprechende Rotorspinnmaschine zu schaffen, mit welchem ein Sicherheitskonzept für die Reaktion auf verschiedene Fehler erhalten wird.

Die Aufgabe wird gelöst mit einem Verfahren und einer Rotorspinnmaschine gemäß den Merkmalen der unabhängigen Ansprüche.

Das erfindungsgemäße Verfahren zum sicheren Starten und/oder Stoppen eines Rotors einer Rotorspinnmaschine zur Erzeugung von Garnen weist eine Vielzahl von Motoren auf, welche jeweils in einem von einem Deckel abgedeckten Rotorgehäuse rotieren, wobei jeder Rotor von einem eigenen Motor angetrieben und zumindest in einem radial und/oder axial aktiven Magnetlager mittels einer Lageregelung gehalten wird. Eine Datenverbindung des Motors mit einer Steuerung ist vorgesehen, um verschiedene Betriebszustände ansteuern zu können. Erfindungsgemäß wird die Ansteuerung für den Antrieb des Rotors in Bezug auf dessen Drehzahl und des aktuellen Betriebszustandes des Rotors und/oder die Lageregelung für das oder die aktiven Magnetlager, die Datenverbindung zur Steuerung des Motors, sowie in einer vorteilhaften Ausführung der Erfindung der ordnungsgemäß geschlossene Deckel, überprüft und im Falle, dass vorgegebene Sollwerte und/oder Zustände nicht erreicht werden, der Start des Rotors blockiert oder der bereits laufende Motor gezielt gestoppt wird.

Wird die Ansteuerung für den Antrieb des Rotors überprüft, so wird bei einer fehlerhaften Ansteuerung des Antriebs einerseits sichergestellt, dass kein fehlerhaftes Garn produziert wird. Andererseits wird ebenfalls sichergestellt, dass der Rotor, welcher derzeit Drehzahlen im Bereich von 200.000 Umdrehungen/min erreichen kann, durch einen fehlerhaften Betrieb nicht zerstört wird und so zur Gefährdung des Personals und zur Zerstörung der Rotorspinnmaschine führen könnte.

Durch die Überwachung der Lageregelung für das oder die aktiven Magnetlager wird erreicht, dass der Rotor stets in seiner Position bleibt. Verlässt der Rotor seine vorgesehene Position, so besteht die Gefahr, dass ein fehlerhaftes Garn produziert wird oder eine Zerstörung der Spinneinrichtung erfolgt.

Bei einer fehlerhaften Datenverbindung zwischen Motor und Steuerung des Motors, kann der zuverlässige Betrieb der Spinnenvorrichtung nicht mehr sichergestellt werden. Auch dies muss dazu führen, dass der Rotor nicht gestartet werden kann oder, falls dieser Zustand ermittelt wird, während der Rotor bereits läuft, muss versucht werden den Rotor möglichst schadensfrei zu stoppen.

Schließlich ist es auch wichtig, dass der Deckel ordnungsgemäß das Rotorgehäuse verschließt. Wenn dies nicht der Fall ist, kann einerseits kein Garn gesponnen werden und andererseits besteht wiederum eine Gefahr für das Bedienungspersonal, welches in einen sich drehenden Rotor hineingreifen und sich verletzen könnte.

In allen diesen oben geschilderten Fällen wird überprüft, ob ein entsprechender geforderter Sollwert oder Zustand erreicht wird bzw. eingehalten wird. Ist dies nicht der Fall, so wird der Start des Rotors blockiert oder der bereits laufende Motor gezielt gestoppt. Hierdurch werden eine Beschädigung der Maschine und eine Verletzungsgefahr für das Bedienungspersonal vermieden.

In einer besonders vorteilhaften Ausführung der Erfindung wird die Geschwindigkeit des Rotors bei Ausfall einer Spannungsversorgung des Motors in Abstimmung mit weiteren Antrieben, die zur Garnerzeugung erforderlich sind, langsam vermindert, um die Garnerzeugung noch aufrechtzuerhalten. Derartige weitere Antriebe sind beispielsweise ein Speiseantrieb, ein Auflösewalzenantrieb, ein Abzugswalzenantrieb oder ein Spulwalzenantrieb. Wenn es gelingt diese Antriebe jeweils proportional zueinander herunterzufahren, so wird im Wesentlichen dasselbe Garn, allerdings bei verminderter Geschwindigkeit, gesponnen. Durch das gezielte Vermindern der Geschwindigkeiten der einzelnen Antriebe im selben Verhältnis zueinander wird verhindert, dass in dieser Phase Garn erzeugt wird, welches später wieder von der Spule abgewickelt und entsorgt werden muss. Da bei modernen Rotorspinnmaschinen mit Geschwindigkeiten um etwa 300 m/min gesponnen wird, wird auch in kürzester Zeit eine große Menge Garn produziert, welches im ungünstigsten Falle zur Entsorgung vieler Meter Garn führen würde.

Wird der Motor bei Ausfall der Spannungsversorgung und bei Unterschreiten einer Mindestgeschwindigkeit des Rotors, insbesondere etwa bei 15.000 Umdrehungen/min, kurzgeschlossen, so erfolgt lediglich noch ein Auslaufen des Motors und eine gezielte Garnproduktion ist damit nicht mehr möglich. Der Vorteil hierbei ist allerdings, dass das Garn zu diesem Zeitpunkt, zu dem ein kontrolliertes Spinnen von Garnen mangels ausreichender Rotorgeschwindigkeit nicht mehr möglich ist, reißt und ein weiteres Garn nicht mehr gesponnen wird. Der Rotor läuft bei kurzgeschlossenem Motor ungesteuert aus.

Bei Ausfall der Lageregelung und/oder der Datenverbindung zur Steuerung und/oder der Spannungsversorgung läuft der Rotor vorzugsweise langsam aus und dient als Generator für das Magnetlager. Hierdurch wird sichergestellt, dass das Magnetlager, welches unter anderem für einen störungsfreien Lauf des Rotors verantwortlich und besonders wichtig ist, auf diese Art und Weise dementsprechend lange funktionsfähig gehalten wird. Erst wenn eine bestimmte unkritische Drehzahl unterschritten wird, ist es möglich den Rotor ohne Beschädigung auch bei nicht mehr aktivem Magnetlager so lange zu lagern, bis er steht.

Besonders vorteilhaft ist es, wenn der Rotor bei Ausfall der Lageregelung in Richtung auf ein axiales Notlauflager gedrängt wird. Hierdurch wird sichergestellt, dass der Rotor nicht unkontrolliert zu liegen kommt und sich aus dem Magnetlager heraus bewegt. Das axiale Notlauflager fängt den Rotor entsprechend sicher auf.

Vorzugsweise wird der Deckel verriegelt, solange der Rotor über einer vorbestimmten Mindestgeschwindigkeit läuft. Eine derartige vorbestimmte Mindestgeschwindigkeit ist beispielsweise 15.000 Umdrehungen/min Bei dieser Drehzahl ist der Rotor für die Maschine und das Bedienungspersonal weniger gefährlich und kommt auch von selbst in relativ kurzer Zeit zum Stillstand.

Der Deckel wird vorzugsweise magnetisch, mechanisch und/oder elektrisch verriegelt. Die Verriegelung des Deckels kann hierdurch sehr einfach mit der Steuerung erfolgen.

In einer besonders vorteilhaften Ausführung der Erfindung erfolgt die Überprüfung, ob der Deckel geöffnet werden darf, redundant. Wird insbesondere durch die Überprüfung der Drehzahl und des aktuellen Betriebszustandes des Rotors sichergestellt, dass der Deckel tatsächlich nur dann geöffnet werden kann, wenn der Rotor sich in einem sicheren Drehzahlbereich oder im Stillstand befindet, so kann eine Beschädigung oder Verletzung sicher verhindert werden. Durch die redundante Überprüfung werden fehlerhafte Messeinrichtungen festgestellt und führen somit nicht zu einer fehlerhaften Beurteilung des Rotorzustandes.

Wird beim Öffnen des Deckels bei unzulässig hoher Drehzahl, insbesondere mehr als 15.000 Umdrehungen/min, ein Notstopp des Rotors veranlasst, so wird sichergestellt, dass der Rotor in kürzester Zeit zum Stillstand kommt. Der Notstopp kann beispielsweise durch eine entsprechende Stromzufuhr erfolgen, mit welcher der Rotorantrieb elektrisch abgebremst wird. Diese Maßnahme ist besonders vorteilhaft, da ein Rotor mit sehr hoher Drehzahl ein extrem hohes Verletzungspotenzial hat. So ist es möglich, dass sich der Rotor aus seiner Lagerung heraus bewegt oder gar zerplatzt. Eine Verletzung des Bedienungspersonals und eine Beschädigung der Rotorspinnmaschine sind hierdurch sehr wahrscheinlich. Deshalb wird versucht den Rotor in kürzester Zeit zum Stillstand zu bringen.

Bleibt während des Notstopps für eine definierte Zeit oder bis zu einer definierten Geschwindigkeit die Antriebsregelung aktiviert, so wird sichergestellt, dass der Rotor möglichst ohne Beschädigung und sehr schnell in einen sicheren Drehzahlbereich oder bis zum Stillstand gebracht wird. Außerdem trägt diese Maßnahme dazu bei, dass noch ein Garn gesponnen werden kann.

Erfolgt der Notstopp des Rotors elektrisch, mechanisch und/oder magnetisch, so kann der Rotor mit einer geeigneten Maßnahme möglichst schnell gestoppt werden.

Eine erfindungsgemäße Rotorspinnmaschine weist ein Sicherheitskonzept auf, welches mit den Verfahrensschritten, wie sie zuvor beschrieben wurden, betrieben wird. Eine derartige Rotorspinnmaschine ist in der Lage, bei Auftreten eines fehlerhaften Zustandes, möglichst schnell zu reagieren und den Rotor entweder gar nicht erst starten zu lassen oder ihn gezielt zu stoppen. Dieses Stoppen kann dabei entweder so erfolgen, dass die Garnproduktion möglichst lange aufrechterhalten wird oder dass der Rotor möglichst schnell gestoppt oder zumindest in einen unkritischen Drehzahlbereich heruntergefahren wird. Eine Verletzung des Bedienungspersonals oder die Beschädigung der Rotorspinnmaschine kann hierdurch sicher vermieden werden.

Weitere Vorteile der Erfindung sind in den nachfolgenden Ausführungsbeispielen beschrieben. Dabei werden in den Figuren verschiedene Sicherheitskonzepte dargestellt. Es zeigt:
- **Figur 1**: das Konzept "Maschine starten",
- **Figur 2**: das Konzept "Notstopp von der Maschine ausgelöst",
- **Figur 3**: das Konzept "Ausfall der Hauptspannung",
- **Figur 4**: das Konzept "Ausfall der Spannungsversorgung des Rotoran triebs",
- **Figur 5**: das Konzept "Unterbrechung der CAN-Kommunikation",
- **Figur 6**: das Konzept "Rotorgehäuse wird geöffnet" und
- **Figur 7**: das Konzept "Maschine wird abgeschaltet".

Sicherheitserfordernisse, welche beim Betrieb der Maschine eingehalten werden sollen, sind, dass beispielsweise das Rotorgehäuse geschlossen bleiben muss während sich der Rotor oberhalb eines bestimmten Geschwindigkeitswertes befindet. Außerdem darf die Maschine erst starten, wenn die Box geschlossen und verriegelt ist. Das Entsperren des Deckels des Rotorgehäuses darf nicht von der Steuerung überbrückbar sein, ebenso dürfen sicherheitsrelevante Maßnahmen und Zustände der Steuerung zum Entsperren nicht genutzt werden.

Um das Öffnen des Rotorgehäuses zu ermöglichen, während sich der Rotor noch bewegt und sich die Energie des noch drehenden Rotors unter einem definierten Wert befindet, muss ein zu der Geschwindigkeit des Rotors redundanter Messwert ermittelt werden. Dieser redundante und diskrete Messwert kann z.B. die Spannung des Motors abgreifen, welche im Wesentlichen proportional zur Geschwindigkeit des Rotors ist. Daraus kann ein logisches Signal erzeugt werden, welches beispielsweise bedeutet, dass die Rotorgeschwindigkeit niedrig ist.

Falls das Rotorgehäuse geöffnet wird, während der Rotor mit hoher Geschwindigkeit umläuft, z.B. weil der Verschlussmechanismus versagt hat, wird der Motor aktiv heruntergefahren. Dies kann beispielsweise dadurch erfolgen, dass der höchstmögliche Strom während den ersten vier Sekunden auf den Motor einwirkt, um ihn elektrisch zu bremsen. Hierdurch wird der Rotor so schnell wie möglich gestoppt. Ohne eine derartige Maßnahme würde es etwa 60 Sekunden benötigen, um den Rotor zu stoppen.

Vorzugsweise sollen alle verwendeten Sensortechnologien, z.B. zur Erzeugung eines Signals, das anzeigt, dass das Rotorgehäuse geschlossen ist, ebenso wie die Verschluss- und Notstopp-Mechanismen so weit wie möglich redundant und ausfallsicher eingesetzt werden. Hierdurch wird sichergestellt, dass auch bei Versagen einer ersten Maßnahme eine zweite Maßnahme bzw. ein zweites Sensormittel vorhanden ist, um einen Zustand bzw. einen Sollwert festzustellen.

Die folgenden Figuren stellen Sicherheitskonzepte dar, welche bei bestimmten Ereignissen eingesetzt werden.

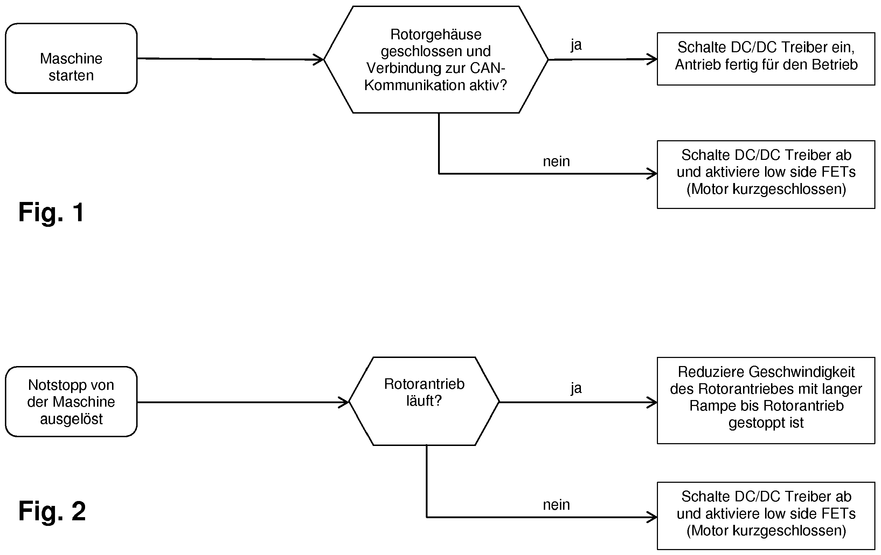

Das in Figur 1 dargestellte Sicherheitskonzept "Maschine starten" überprüft, ob das Rotorgehäuse geschlossen ist und eine Verbindung zur CAN-Kommunikation zwischen dem Rotorantrieb und der Steuerung vorhanden und aktiv ist. Außerdem kann überprüft werden, ob die Lageregelung für die aktiven Magnetlager funktionsfähig ist. Sind alle diese Tests erfolgreich abgeschlossen, so wird ein DC/DC Treiber eingeschaltet und der Antrieb fertig für den Betrieb gemacht. Sofern festgestellt wird, dass eine der Überprüfungen nicht zufriedenstellend abgeschlossen werden kann, so wird veranlasst, dass der DC/DC Treiber abgeschaltet wird und low side FETs aktiviert werden. Der Motor wird hierdurch kurzgeschlossen und kann nicht mehr betrieben werden. Eine Gefährdung durch ein versehentliches Anlaufen des Motors ist damit ausgeschlossen.

Entsprechend Figur 2 wird bei dem Sicherheitskonzept "Notstopp von der Maschine ausgelöst" zuerst überprüft, ob der Rotorantrieb läuft. Wenn dies bejaht wird, so wird die Geschwindigkeit des Rotorantriebes zumindest bis zu einer Mindestgeschwindigkeit herabgefahren. Das heißt, dass die Geschwindigkeit des Motors für den Spinnrotor reduziert wird. Hierdurch ist es in einer bevorzugten Ausführung der Erfindung möglich, dass die Geschwindigkeit mit einer langen Rampe reduziert wird. Dies bedeutet, dass die Geschwindigkeit sehr langsam zurückgenommen wird. Insbesondere, wenn die anderen Antriebe der Spinnstelle synchron ebenso langsam zurückgefahren werden, ist es möglich, dass weiterhin Garn, im Idealfall sogar Garn, das dem im Normalbetrieb hergestellten Garn entspricht, gesponnen werden kann. Ab einer bestimmten Geschwindigkeit, beispielsweise 15.000 Umdrehungen/min, wird der Rotor nicht mehr in der Lage sein, ein entsprechendes Garn herzustellen. Ab diesem Zeitpunkt ist es dann möglich den Rotor besonders schnell, also mit einer steilen Rampe, zu stoppen. Wenn festgestellt wird, dass der Rotor nicht mehr in Drehbewegung ist oder nur noch eine sehr geringe Drehzahl, wie beispielsweise weniger als 15.000 Umdrehungen/min aufweist, so wird der DC/DC Treiber abgeschaltet und low side FETs werden aktiviert. Der Motor wird damit kurzgeschlossen und läuft aus oder wird mit anderen Mitteln gestoppt.

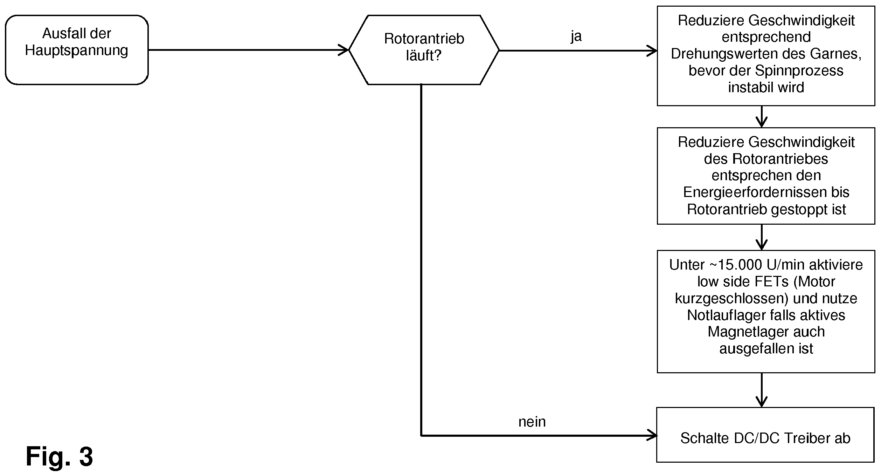

In Figur 3 ist das Sicherheitskonzept zum "Ausfall der Hauptspannung" beschrieben. Auch hier wird zuerst überprüft ob der Rotor läuft. Wenn dies der Fall ist, so wird die Geschwindigkeit entsprechend den Drehungswerten des Garnes reduziert, bevor der Spinnprozess instabil wird. Es wird also versucht, den Stoppvorgang so durchzuführen, dass noch Garn gesponnen werden kann. Idealerweise entspricht das Garn im Wesentlichen dem Garn des Normalzustandes der Spinnstelle. Wenn der Spinnprozess instabil wird, also beispielsweise, wenn die Rotordrehzahl zu niedrig zum Spinnen wird, werden Maßnahmen ergriffen, um die Geschwindigkeit des Rotorantriebes entsprechend den Energieerfordernissen der Maschine zu reduzieren. Dies bedeutet, dass der Rotor noch weiter in seine Geschwindigkeit reduziert wird und als Generator beispielsweise das Magnetlager mit Energie versorgt, damit die Lagerung des Rotors weiter funktionsfähig ist. Wird die Drehzahl des Rotors weiter abgesenkt, beispielsweise unter 15.000 Umdrehungen/min, werden low side FETs aktiviert und der Motor wird dadurch kurzgeschlossen. Der Motor erzeugt somit keine Energie als Generator mehr und kann die Magnetlager nicht mehr mit einer entsprechenden Spannung versorgen. In diesem Falle ist es vorteilhaft, wenn Notlauflager vorhanden sind, welche bei einem dann zu erwartenden Ausfall der aktiven Magnetlager, den Rotor auffängt. Das Notlauflager bewirkt, dass auch bei Abschaltung oder Ausfall der Energieversorgung die Lagerelemente durch den Rotor nicht zerstört werden. So kann beispielsweise vorgesehen sein, dass der Rotor bei Ausfall des aktiven Magnetlagers auf einen Anschlag aufläuft und dort mechanisch gebremst wird. Dabei ist es vorteilhaft, wenn der Rotor in eine axiale Richtung gedrängt wird, in welcher er stabil aufgefangen werden kann. Schließlich wird der DC/DC Treiber abgeschaltet und das Rotorgehäuse kann geöffnet werden.

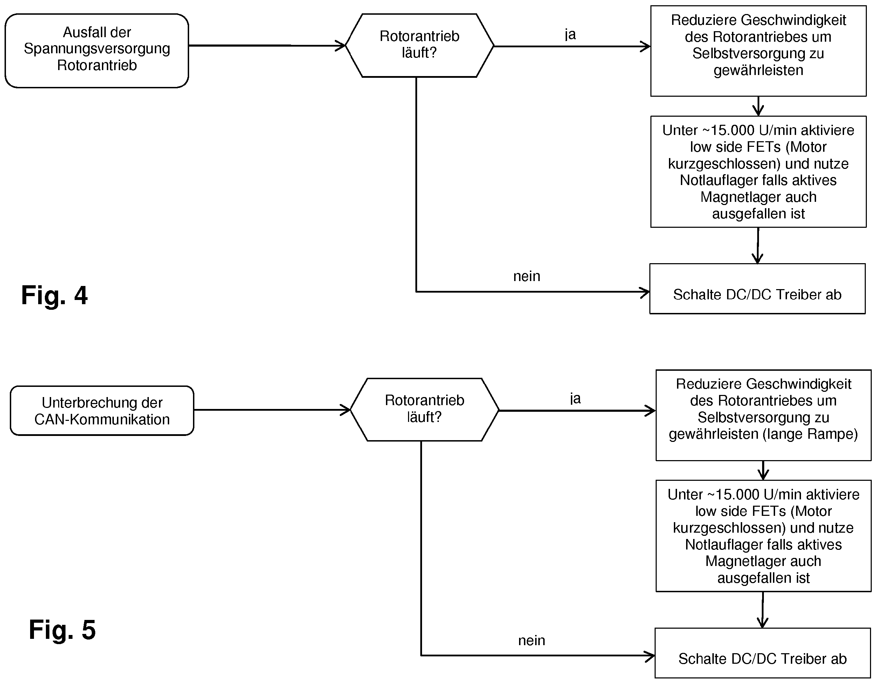

In Figur 4 ist das Sicherheitskonzept "Ausfall der Spannungsversorgung des Rotorantriebs" dargestellt. Auch hier wird zuerst überprüft ob der Rotorantrieb läuft. Läuft der Rotor nicht, so wird der DC/DC Treiber abgeschaltet. Wenn der Rotor hingegen noch in Bewegung ist, so wird die Geschwindigkeit des Rotorantriebes derart reduziert, dass die Selbstversorgung durch den Generatorbetrieb noch gewährleistet ist. Ab einer bestimmten Geschwindigkeit, beispielsweise 15.000 Umdrehungen/min, werden low side FETs aktiviert und der Motor kurzgeschlossen. Falls die aktiven Magnetlager ebenfalls ausgefallen sind, wird das Notlauflager für den Rotor genutzt. Sobald der Rotorantrieb nicht mehr läuft, werden die DC/DC Treiber abgeschaltet. Das Rotorgehäuse kann ab diesem Zeitpunkt durch Entfernen des Deckels geöffnet werden.

Figur 5 zeigt das Sicherheitskonzept "Unterbrechung der CAN-Kommunikation". Das Vorgehen ist ähnlich wie bei dem Konzept "Ausfall der Spannungsversorgung des Rotorantriebs" gemäß Figur 4. Es wird die Geschwindigkeit des Rotorantriebs reduziert, um die Selbstversorgung zu gewährleisten. Vorzugsweise wird der Rotorantrieb über eine lange Rampe heruntergefahren, damit der Spinnbetrieb noch aufrechterhalten werden kann. Bei Erreichen einer niedrigen Geschwindigkeit, beispielsweise 15.000 Umdrehungen/min, werden low side FETs aktiviert und gegebenenfalls die Notlauflager genutzt, falls auch die aktiven Magnetlager ausgefallen sind. Wenn der Rotor steht, werden die DC/DC Treiber abgeschaltet. Danach ist das Sicherheitskonzept für den Fall "Unterbrechung der CAN-Kommunikation" beendet.

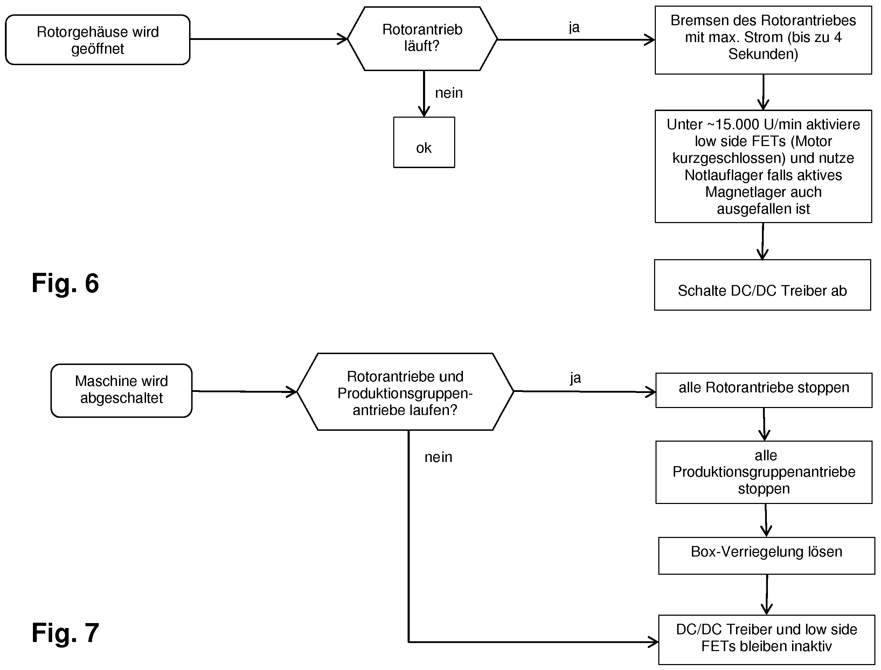

In Figur 6 wird das Verfahren "Öffnen des Rotorgehäuses" beschrieben. Wenn der Rotorantrieb noch läuft, wird der Rotor mit maximalem Strom bis zu 4 Sekunden lang beaufschlagt. Die Antriebseinrichtung wird dabei elektrisch sehr schnell auf eine niedrige Geschwindigkeit gebremst. Unter etwa 15.000 Umdrehungen/min werden dann wieder die oben geschilderten Maßnahmen ergriffen. So werden die low side FETs aktiviert und der Motor kurzgeschlossen. Bei Bedarf werden die Notlauflager genutzt, falls die aktiven Magnetlager auch ausgefallen sind, um Beschädigungen zu vermeiden. Schließlich werden die DC/DC Treiber abgeschaltet, um die Spinnvorrichtung in einem sicheren Zustand zu haben.

Entsprechend Figur 7 bleiben die DC/DC Treiber und low side FETs inaktiv, wenn beim "Abschalten der Maschine" Rotorantriebe und Produktionsgruppenantriebe nicht mehr laufen. Wird hingegen festgestellt, dass die Rotorantriebe und Produktionsgruppenantriebe doch noch laufen, so werden zuerst alle Rotorantriebe gestoppt. Sodann werden alle Produktionsgruppenantriebe gestoppt. Erst wenn alle Antriebe abgestellt sind, können die Rotorgehäuse-Verriegelungen der Spinnstellen gelöst werden. Schließlich wird sichergestellt, dass die DC/DC Treiber und low side FETs inaktiv bleiben, um die Maschine in einem sicheren Zustand zu halten. Dies wird auch der Fall sein, wenn bei der ersten Prüfung festgestellt wird, dass die Rotorantriebe und Produktionsgruppenantriebe nicht mehr laufen. Auch dann wird nochmals überprüft ob die DC/DC Treiber und low side FETs inaktiv sind, um die Maschine zu sichern.

Sehr wesentlich bei dem geschilderten Verfahren zum sicheren Starten und/oder Stoppen eines Rotors ist, dass der Rotor nur dann gestartet wird, wenn alle Sicherheitsmaßnahmen erfüllt sind bzw. wenn vorgegebene Sollwerte und/oder Zustände erreicht werden. Wenn dies nicht der Fall ist, wird der Start des Rotors blockiert oder der bereits laufende Rotor wird gezielt gestoppt. Durch das gezielte Stoppen werden Beschädigungen der Maschine und Verletzung des Bedienungspersonals vermieden und im Idealfall wird während des Stoppens auch noch Garn erzeugt, das dem im normalen Spinnprozess erzeugten Garn gleicht. Neben den Sicherheitsaspekten gewährleistet das dargestellte Konzept damit auch eine Produktionserhöhung, da trotz eines Fehlverhaltens einzelner Komponenten versucht werden kann ein brauchbares Garn herzustellen.

Zusammenfassend können einzelne oder alle der folgenden Zustände wesentlich sein, um
1. den Rotor starten zu dürfen:
   - Rotorgehäuse muss geschlossen sein, um AC Energieübertragung zu erhalten
   - Alle Kabel von der Steuerung zur Spinnstelle müssen in Ordnung sein
   - Steuerung muss ordnungsgemäß arbeiten, um Signale zu erzeugen
2. den Rotor stoppen zu müssen:
   - Öffnen der Spinnbox
   - Beschädigung von Spinnstellen-Umformern
   - Unterbrochene oder kurzgeschlossene Kabel von der Steuerung zur Spinnstelle
   - Fehlfunktion der Sensoren
   - Steuerung erzeugt kein Sicherheitssignal

Die vorliegende Erfindung ist nicht auf die dargestellten und beschriebenen Ausführungsbeispiele beschränkt. Abwandlungen im Rahmen der Patentansprüche sind ebenso möglich wie eine Kombination der Merkmale, auch wenn diese in unterschiedlichen Ausführungsbeispielen dargestellt und beschrieben sind.

## Patentansprüche

1. Verfahren zum sicheren Starten und/oder Stoppen eines Rotors einer Rotorspinnmaschine zur Erzeugung von Garn, mit einer Vielzahl von Rotoren, die jeweils in einem von einem Deckel abgedeckten Rotorgehäuse rotieren, wobei jeder Rotor von einem eigenen Motor angetrieben und in zumindest einem radial und/oder axial aktiven Magnetlager, mittels einer Lageregelung gehalten wird und eine Datenverbindung des Motors mit einer Steuerung vorgesehen ist, um den Rotor in verschiedenen Betriebszuständen anzusteuern, **dadurch gekennzeichnet, dass**
- die Ansteuerung für den Antrieb des Rotors in Bezug auf dessen Drehzahl und des aktuellen Betriebszustandes des Rotors,
- die Lageregelung für das oder die aktive/n Magnetlager und/oder
- die Datenverbindung zur Steuerung des Motors
überprüft wird und im Falle, dass vorgegebene Sollwerte und/oder Zustände nicht erreicht werden, der Start des Rotors blockiert wird oder der bereits laufende Rotor gezielt gestoppt wird.

2. Verfahren nach dem vorherigen Anspruch, **dadurch gekennzeichnet, dass** zusätzlich der ordnungsgemäß geschlossene Deckel überprüft wird und im Falle, dass vorgegebene Sollwerte und/oder Zustände nicht erreicht werden, der Start des Rotors blockiert wird oder der bereits laufende Rotor gezielt gestoppt wird.

3. Verfahren nach einem oder mehreren der vorherigen Ansprüche, **dadurch gekennzeichnet, dass** die Geschwindigkeit des Rotors bei Ausfall einer Spannungsversorgung des Motors, in Abstimmung mit weiteren Antrieben, die zur Garnerzeugung erforderlich sind, langsam vermindert wird, um die Garnerzeugung noch aufrecht zu erhalten.

4. Verfahren nach einem oder mehreren der vorherigen Ansprüche, **dadurch gekennzeichnet, dass** der Motor bei Ausfall der Spannungsversorgung und bei Unterschreiten einer Mindestgeschwindigkeit des Rotors, insbesondere etwa 15.000 Umdrehungen/min, kurzgeschlossen wird.

5. Verfahren nach dem vorherigen Anspruch, **dadurch gekennzeichnet, dass** der Rotor bei kurzgeschlossenem Motor ungesteuert ausläuft.

6. Verfahren nach einem oder mehreren der vorherigen Ansprüche, **dadurch gekennzeichnet, dass** der Rotor bei Ausfall der Lageregelung und/oder der Datenverbindung zur Steuerung und/oder der Spannungsversorgung langsam ausläuft und der Motor als Generator für das Magnetlager dient.

7. Verfahren nach einem oder mehreren der vorherigen Ansprüche, **dadurch gekennzeichnet, dass** der Rotor bei Ausfall der Lageregelung in Richtung auf ein axiales Notlauflager hin gedrängt wird.

8. Verfahren nach einem oder mehreren der vorherigen Ansprüche, **dadurch gekennzeichnet, dass** der Deckel verriegelt wird, solange der Rotor über einer vorbestimmten Mindestgeschwindigkeit, insbesondere etwa 15.000 U/min, läuft.

9. Verfahren nach einem oder mehreren der vorherigen Ansprüche, **dadurch gekennzeichnet, dass** der Deckel magnetisch, mechanisch und/oder elektrisch verriegelt wird.

10. Verfahren nach einem oder mehreren der vorherigen Ansprüche, **dadurch gekennzeichnet, dass** die Überprüfung, ob der Deckel geöffnet werden darf, redundant, insbesondere durch Überprüfung der Drehzahl und des aktuellen Betriebszustandes des Rotors, erfolgt.

11. Verfahren nach einem oder mehreren der vorherigen Ansprüche, **dadurch gekennzeichnet, dass** beim Öffnen des Deckels bei unzulässig hoher Drehzahl des Rotors, insbesondere mehr als 15.000 U/min., ein Notstopp des Rotors veranlasst wird.

12. Verfahren nach dem vorherigen Anspruch, **dadurch gekennzeichnet, dass** während des Notstopps für eine definierte Zeit und/oder bis zu einer definierten Geschwindigkeit die Antriebsregelung aktiviert bleibt.

13. Verfahren nach einem der Ansprüche 11 - 12, **dadurch gekennzeichnet, dass** der Notstopp des Rotors elektrisch, mechanisch und/oder magnetisch erfolgt.

14. Rotorspinnmaschine mit einer Vielzahl von Rotoren, die jeweils in einem von einem Deckel abgedeckten Rotorgehäuse rotierbar sind, wobei jeder Rotor von einem eigenen Motor antreibbar und in zumindest einem radial und/oder axial aktiven Magnetlager, mittels einer Lageregelung haltbar ist und einer Datenverbindung des Motors mit einer Steuerung zum Ansteuern des Rotors in verschiedenen Betriebszuständen, **dadurch gekennzeichnet, dass** sie zur Durchführung des Verfahrens, nach einem oder mehreren der vorherigen Ansprüche, geeignet ist.

## Claims

1. Method for the safe starting and/or stopping of a rotor of a rotor spinning machine for the production of yarn, with a multiple number of rotors, each of which rotates in a rotor housing covered by a lid, wherein each rotor is driven by its own motor and is held in at least one radially and/or axially active magnetic bearing by means of a position controller, and a data connection of the motor with a control unit is provided, in order to control the rotor in various operating states, **characterized in that**
- the control for the drive of the rotor in relation to its speed and the current operating state of the rotor,
- the position control for the one or more active magnetic bearings and/or
- the data connection for controlling the motor
are checked and, in the event that predetermined target values and/or states are not met, the start of the rotor is blocked or the rotor that is already running is selectively stopped.

2. Method according to the preceding claim, **characterized in that** there is also a check of the properly closed lid, and, in the event that predetermined target values and/or states are not met, the start of the rotor is blocked or the rotor that is already running is selectively stopped.

3. Method according to one or more of the preceding claims, **characterized in that** in the event of a loss of a power supply of the motor the speed of the rotor is slowly reduced, in coordination with additional drives, which are necessary for yarn production, in order to still maintain yarn production.

4. Method according to one or more of the preceding claims, **characterized in that**, upon a loss of power supply and falling below a minimum speed of the rotor, in particular approximately 15,000 revolutions/min, the motor is short-circuited.

5. Method according to the preceding claim, **characterized in that**, upon a short-circuited motor, the rotor runs down without any control.

6. Method according to one or more of the preceding claims, **characterized in that**, upon a loss of the position control and/or data connection to the control unit and/or to the power supply, the rotor runs down slowly, and the motor serves as a generator for the magnetic bearing.

7. Method according to one or more of the preceding claims, **characterized in that**, upon a loss of position control, the rotor is pushed in the direction of an axial fail-safe bearing.

8. Method according to one or more of the preceding claims, **characterized in that** the lid is locked as long as the rotor runs above a predetermined minimum speed, in particular approximately 15,000 revolutions/m in.

9. Method according to one or more of the preceding claims, **characterized in that** the lid is locked magnetically, mechanically and/or electrically.

10. Method according to one or more of the preceding claims, **characterized in that** the check of whether the lid may be opened takes place redundantly, particularly through the checking of the rotational speed and the current operating state of the rotor.

11. Method according to one or more of the preceding claims, **characterized in that**, upon opening the lid at an excessively high rotational speed of the rotor, in particular more than 15,000 revolutions/min, an emergency stop of the rotor is initiated.

12. Method according to the preceding claim, **characterized in that**, during the emergency stop for a defined time and/or up to a defined speed, the drive control remains activated.

13. Method according to one of the claims 11 - 12, **characterized in that** the emergency stop of the rotor takes place electrically, mechanically and/or magnetically.

14. Rotor spinning machine with a multiple number of rotors, each of which rotates in a rotor housing covered by a lid, wherein each rotor is driven by its own motor and is held in at least one radially and/or axially active magnetic bearing by means of a position controller, and a data connection of the motor with a control unit is provided, in order to control the rotor in various operating states, **characterized in that** it is suitable for carrying out the method, according to one or more of the preceding claims.

## Revendications

1. Procédé pour démarrer et/ou arrêter fiablement un rotor d'une machine de filature à rotors pour la production de fil, avec une pluralité de rotors, qui tournent chacun dans un carter de rotor recouvert par un couvercle, chaque rotor étant entraîné par son propre moteur et étant maintenu dans au moins un palier magnétique actif radialement et/ou axialement au moyen d'une commande de position et une connexion de données du moteur avec une commande étant prévue pour commander le rotor dans différents états de fonctionnement, **caractérisé en ce que**
- la commande pour l'entraînement du rotor en termes de sa vitesse de rotation et de l'état de fonctionnement actuel du rotor,
- la commande de position pour le ou les palier(s) magnétique(s) actifs) et/ou
- la connexion de données pour la commande du moteur
est/sont contrôlée(s) et, dans le cas que des valeurs de consigne et/ou des états prédéfini(e)s ne sont pas atteint(e)s, le démarrage du rotor est bloqué ou le rotor déjà en marche est arrêté de manière ciblée.

2. Procédé selon la revendication précédente, caractérisé en ce qu'en plus, le couvercle correctement fermé est contrôlé et, dans le cas que des valeurs de consigne et/ou des états prédéfini(e)s ne sont pas atteint(e)s, le démarrage du rotor est bloqué ou le rotor déjà en marche est arrêté de manière ciblée.

3. Procédé selon l'une quelconque ou plusieurs des revendications précédentes, **caractérisé en ce que**, en cas de défaillance d'une alimentation en tension du moteur, la vitesse du rotor est lentement réduite en coordination avec d'autres entraînements qui sont nécessaires à la production de fil, afin de maintenir encore la production de fil.

4. Procédé selon l'une quelconque ou plusieurs des revendications précédentes, **caractérisé en ce que** le moteur est court-circuité en cas de défaillance de l'alimentation en tension et si la vitesse du rotor n'atteint pas une vitesse minimale, en particulier d'environ 15 000 tours/min.

5. Procédé selon la revendication précédente, **caractérisé en ce que** en cas que le rotor termine son mouvement progressivement de manière non commandée lorsque le moteur est court-circuité.

6. Procédé selon l'une quelconque ou plusieurs des revendications précédentes, **caractérisé en ce que** le rotor termine son mouvement progressivement en cas de défaillance de la commande de position et/ou de la connexion de données avec la commande et/ou de l'alimentation en tension et le moteur sert de générateur pour le palier magnétique.

7. Procédé selon l'une quelconque ou plusieurs des revendications précédentes, **caractérisé en ce que** le rotor est forcé vers un palier de secours axial en cas de défaillance de la commande de position.

8. Procédé selon l'une quelconque ou plusieurs des revendications précédentes, **caractérisé en ce que** le couvercle est verrouillé tant que le rotor tourne à plus d'une vitesse minimale prédéterminée, en particulier d'environ 15 000 tours/min.

9. Procédé selon l'une quelconque ou plusieurs des revendications précédentes, **caractérisé en ce que** le couvercle est verrouillé magnétiquement, mécaniquement et/ou électriquement.

10. Procédé selon l'une quelconque ou plusieurs des revendications précédentes, **caractérisé en ce que** la vérification consistant à déterminer s'il est permis d'ouvrir le couvercle est effectuée de manière redondante, en particulier par vérification de la vitesse de rotation et l'état de fonctionnement actuel du rotor.

11. Procédé selon l'une quelconque ou plusieurs des revendications précédentes, caractérisé en ce qu'un arrêt d'urgence du rotor est déclenché en cas d'ouverture du couvercle à une vitesse du rotor inadmissiblement élevée, en particulier de plus de 15 000 tours/min.

12. Procédé selon la revendication précédente, **caractérisé en ce que** durant l'arrêt d'urgence, la commande d'entraînement reste activée pendant un temps défini et/ou jusqu'à une vitesse définie.

13. Procédé selon l'une quelconque des revendications 11 - 12, **caractérisé en ce que** l'arrêt d'urgence du rotor s'effectue électriquement, mécaniquement et/ou magnétiquement.

14. Machine de filature à rotors avec une pluralité de rotors, qui peuvent tourner chacun dans un carter de rotor recouvert par un couvercle, chaque rotor pouvant être entraîné par son propre moteur et pouvant être maintenu dans au moins un palier magnétique actif radialement et/ou axialement au moyen d'une commande de position, et une connexion de données du moteur avec une commande étant prévue pour commander le rotor dans différents états de fonctionnement, caractérisée en ce qu'elle est appropriée pour réaliser le procédé selon l'une quelconque ou plusieurs des revendications précédentes.
